# EUROPEAN PATENT SPECIFICATION

(11) **EP 4 321 794 B1**
(45) Date of publication and mention of the grant of the patent: **05.03.2025**
(21) Application number: 22196099.0
(22) Date of filing: 16.09.2022
(51) Int. Cl.: F21S 41/143, F21S 41/148, F21S 41/125, F21S 41/663

(54) **ILLUMINATION MODULE FOR A VEHICLE LAMP WITH MULTI LIGHT SOURCES AND HEADLIGHT HAVING THE SAME**
MODULE D'ILLUMINATION POUR UN FEU DE VEHICULE A SOURCES LUMINEUSES MULTIPLES ET PHARE COMPORTANT CE MODULE
MODULE D'ÉCLAIRAGE À SOURCES LUMINEUSES MULTIPLES ET PHARE DOTÉ DE CELUI-CI

(30) Priority: 12.08.2022 US 202263397711 P
(43) Date of publication of application: 14.02.2024
(73) Proprietor: Coplus Inc., Tainan City (TW)
(72) Inventor: WU, Jacob, Tainan City (TW)
(74) Representative: D Young & Co LLP

(56) References cited:
- EP-A1- 2 161 494
- EP-A1- 2 927 569
- EP-A2- 3 505 818
- CN-A- 107 504 430
- DE-A1- 102010 056 312
- DE-A1- 102012 017 596
- DE-A1- 102020 200 413
- JP-A- 2006 313 681
- JP-A- 2013 149 502
- US-A1- 2013 128 603
- US-A1- 2020 124 243

## Description

### BACKGROUND

### Technical Field

This invention is related to vehicle parts, in particular to an illumination module with multi light sources and vehicle lamp having the illumination module.

### Related Art

Compared with incandescent lamps, LEDs have the advantages of small size, high brightness, long service life and power saving. LEDs have been used in automotive headlamps to produce high brightness white light, which can achieve good lighting effects under normal conditions. However, the color temperature of the white light generated by LED automotive headlamps is relatively high and often does not achieve the desired lighting effect in bad weather conditions, such as rainy weather, snowy weather or foggy weather. The white light may also affect the driver's vision, which in turn affects the safety of driving.

Therefore, in bad weather, drivers often need to turn on the fog lights and illuminate with the white light from the LED vehicle lamp set to increase the safety of driving. However, the fog lights are installed in a low position and irradiated at a close distance, which usually only have the effect of warning and do not provide good lighting effect. In addition, fog lights are mostly stand-alone, not even standard equipment when the car is sold. Additional retrofitting also increases installation costs.
EP 3 505 818 A2 discloses a vehicular lamp such as a fog lamp for an automobile including: an optical system including white and yellow LEDs serving as a light source and an inner lens for performing light distribution control of light emitted from the LEDs. US 2020 / 124243 discloses a lighting unit of an automotive headlamp comprising: a series of two or more reflectors arranged side by side and coincident with each other; at least two light sources are arranged per reflector and disposed such that each light source provides light rays to the reflector targeted immediately adjacent to a focal point of the corresponding reflector and on opposing sides of the focal point; and the at least two light sources for each reflector are rotationally arranged at a set positional angle relative to the at least two light sources of the coincident reflector to produce a centered output beam. CN 107 504 430 A discloses a car lamp lighting device wherein a lighting chamber is formed in the device, wherein at least one reflecting mirror unit, and at least two different color LED light sources which are arranged in front of each reflecting mirror unit are arranged in the lighting chamber; each reflecting mirror unit is formed by joining a plurality of reflecting surfaces in a matrix form; each reflecting surface is treated as a reflecting focus of the LED light source with one color. The car lamp lighting device has different lighting functions; a plurality of reflecting mirror units can be distributed as requirement so as to meet the demand of a large area on lighting. JP 2013 149502 A, US 2013/128603 A1, DE 10 2020 200413 A1, DE 10 2010 056312 A1, EP 2 927 569 A1, and DE 10 2012 017596 A1 disclose further examples of known vehicular lamps.

### SUMMARY

The invention is defined in the appended claims. In order to improve the shortcomings of the traditional LED headlamp in the art, this invention further proposes to set up a multiple color light sources in the vehicle lamp, which can generate different color lights at the same time and can significantly improve the problem of poor lighting effect of the LED headlamp in bad weather.

To achieve the object, this invention provides in particular an illumination module with multi light sources, which comprises at least one first optical adjustment unit; at least one first light source configured to generate a first color light, and projects the first color light to the first optical adjustment unit, wherein the first optical adjustment unit is configured to project the first color light to a front of the illumination module with multi light sources; at least one second optical adjustment unit; at least one second light source configured to generate a second color light, and projects the second color light to the second optical adjustment unit, wherein the second optical adjustment unit is configured to project the second color light to the front of the illumination module with multi light sources, and the first color light and the second color light partially or fully overlap.

This disclosure further provides a vehicle lamp, which comprises the above-mentioned plurality of illumination modules integrated into a lamp housing.

In practical application, an ordinary headlamp can be directly replaced by the illumination module with multi light sources described in this disclosure, and the light control lever in the vehicle can be adjusted to enable the vehicle to emit a bad weather light source. In other words, the headlamp described in the present disclosure can be quickly and conveniently installed on an ordinary vehicle and improve the safety of the vehicle.

### BRIEF DESCRIPTION OF THE

### DRAWINGS

This invention will become more fully understood from the detailed description given herein below for illustration only, and thus not limitative of this invention, wherein:
FIG. 1 is a schematic structural diagram of a vehicle lamp having an illumination module with multi light sources according to an example of this disclosure.
FIG. 2 is a cross-sectional view of the illumination module with multi light sources according to an example of this disclosure.
FIG. 3 is a cross-sectional view of the illumination module with multi light sources according to another example of this disclosure.
FIG. 4 is a cross-sectional view of the illumination module with multi light sources according to another example of this disclosure.
FIG. 5 is a top cross-sectional view of the illumination module with multi light sources according to an example of this disclosure.
FIG. 6 is a side cross-sectional view of the illumination module with multi light sources according to an example of this disclosure.
FIG. 7 is a schematic three-dimensional diagram of the illumination module with multi light sources according to an example of this disclosure.
FIG. 8 is a schematic three-dimensional diagram of the illumination module with multi light sources according to an embodiment of the invention.
FIG. 9 is a schematic structural diagram of a vehicle lamp having an illumination module with multi light sources according to another example of this disclosure.
FIG. 10 is a schematic structural diagram of a vehicle lamp having an illumination module with multi light sources according to another example of this disclosure.
FIG. 11 is a schematic structural diagram of a vehicle lamp having an illumination module with multi light sources according to another example of this disclosure.
FIG. 12 is a schematic three-dimensional exploded diagram of the illumination module with multi light sources according to another example of this disclosure.
FIG. 13 is a connection diagram of light sources, a control circuit and a switch of the illumination module with multi light sources according to the invention.
FIG. 14 is a connection diagram of light sources and the control circuit of the illumination module with multi light sources according to another example of this disclosure.
FIG. 15 is a connection diagram of light sources and the control circuit of the illumination module with multi light sources according to another example of this disclosure.

### DETAILED DESCRIPTION

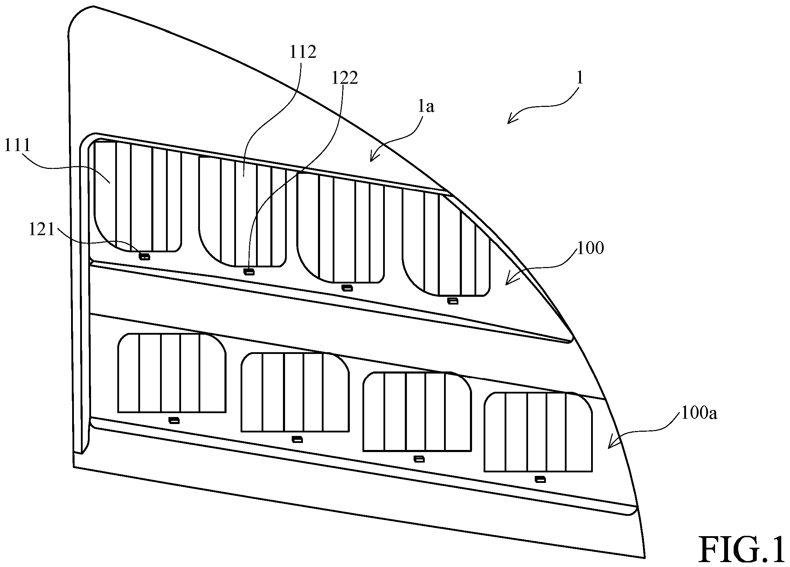

FIG. 1 is a schematic structural diagram of a vehicle lamp with an illumination module according to an example of this disclosure. The vehicle lamp 1 comprises a plurality of illumination modules 100 with multi light sources, wherein illumination modules 100 are integrated into a lamp housing la. In one specific example, the vehicle lamp 1 may be a headlight for vehicle. In practical application, an ordinary headlamp can be directly replaced by the vehicle lamp 1 described in this disclosure, so as to improve the lighting effect and safety of the vehicle.

In one specific example, the vehicle lamp 1 may further includes an auxiliary illumination module 100a integrated in the lamp housing la. In one example of this disclosure, the illumination module 100 may be a low beam module, and the auxiliary illumination module 100a may be a high beam module. In another example of this disclosure, the illumination module 100 may be the high beam module, and the auxiliary illumination module 100a may be the low beam module.

As shown in FIG. 1, the illumination module 100 with multi light sources includes at least one first optical adjustment unit 111, at least one first light source 121, at least one second optical adjustment unit 112 and at least one second light source 122.

As shown in FIG. 1, the first light source 121 is configured to generate a first color light L1, and projects the first color light L1 to the first optical adjustment unit 111, such that the first optical adjustment unit 111 projects the first color light L1 to the front of the illumination module 100 with multi light sources. The second light source 122 is configured to generate a second color light L2, and projects the second color light L2 to the second optical adjustment unit 112, such that the second optical adjustment unit 112 projects the second color light L2 to the front of the illumination module 100 with multi light sources, wherein the first color light L1 and the second color light L2 partially or fully overlap.

The first light source 121 and the second light source 122 are respectively configured to generate the first color light L1 and the second color light L2. The first color light L1 and the second color light L2 are light with different wavelengths, colors or color temperature. For example, the first color light L1 is white light, and the second color light L2 is yellow light. In one specific example, the first light source 121 and the second light source 122 are LEDs, but other type of light sources is not excluded in this disclosure.

The first optical adjustment unit 111 and the second optical adjustment unit 112 may be a reflecting cup or a lens.

As shown in FIG. 1, the first optical adjustment unit 111 and the second optical adjustment unit 112 are reflecting cups. The first optical adjustment unit 111 and the second optical adjustment unit 112 are disposed on the lamp housing la and spaced from each other. The first light source 121 and the second light source 122 are also disposed on the lamp housing la. The first light source 121 and the second light source 122 respectively project the first color light L1 and the second color light L2 to the first optical adjustment unit 111 and the second optical adjustment unit 112. The first optical adjustment unit 111 and the second optical adjustment unit 112 respectively reflect the first color light L1 and the second color light L2, and the first color light L1 and the second color light L2 are projected to the front of the illumination module 100 with multi light sources, wherein the reflected first color light L1 and reflected the second color light L2 project to approximately overlapping angular ranges. The first optical adjustment unit 111 and the second optical adjustment unit 112 shown in FIG. 1 may be two independent elements, which are respectively assembled to the lamp housing la.

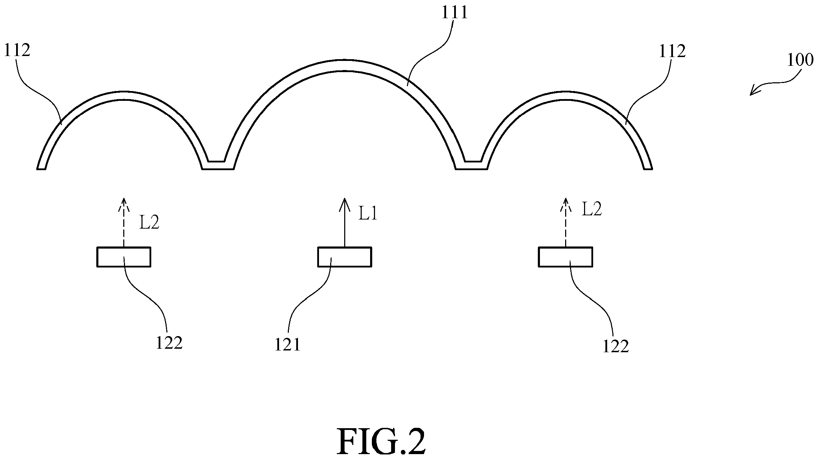

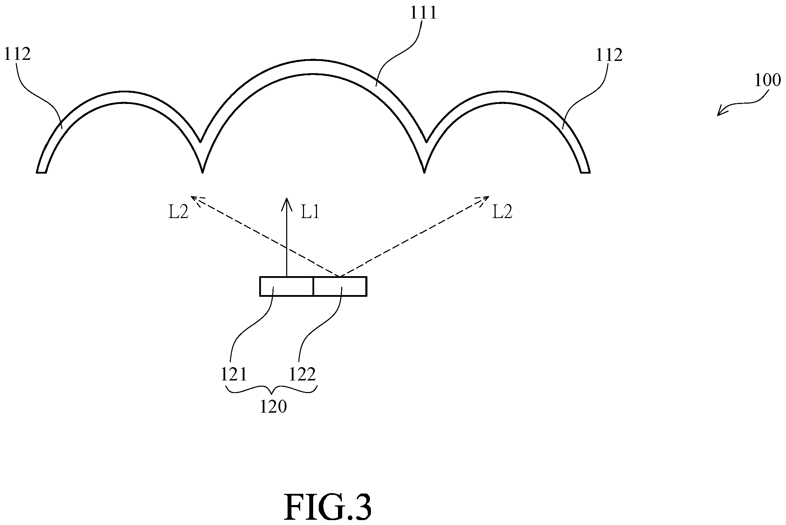

As shown in FIG. 2 and FIG. 3, the first optical adjustment unit 111 and the second optical adjustment unit 112 are reflecting cups, and the edges of them are fitted together to form a single component. Further, the single component is disposed in the lamp housing la, which is convenient for production assembly. The difference between FIG. 2 and FIG. 3 is that, in the example of FIG. 2, there is a distance between two adjacent reflecting cups, so two adjacent reflecting cups are connected to each other through a horizontal extension. In the example of FIG 3, the edges of two reflecting cups are connected to each other.

In addition, as shown in FIG. 3, the first light source 121 and the second light source 122 are adjacent to each other. Plural first light sources 121 and plural second light sources 122 are closely arranged into a light source array 120. Each of the first light sources 121 and each of the second light sources 122 may face or correspond to the first optical adjustment unit 111 and the second optical adjustment unit 112 to reflect the first color light L1 and the second color light L2 toward different angle range.

As shown in FIG. 3, the first light source 121 and the second light source 122 may be fitted together as the light source array 120, and the first light source 121 and the second light source 122 face or correspond to the first optical adjustment unit 111 and the second optical adjustment unit 112. The first optical adjustment unit 111 is configured to reflect the first color light L1 generated by the firs light source 121, and the second optical adjustment unit 112 is configured to reflect the second color light L2 generate by the second light source 122. In practical application, the first optical adjustment unit 111 may reflect part of the second color light L2, and the second optical adjustment unit 112 may reflect part of the first color light L1. The reflected first color light L1 and the reflected second color light L2 are projected in the front of the illumination module 100 with multi light sources, wherein the first color light L1 and the second color light L2 partially or completely overlap.

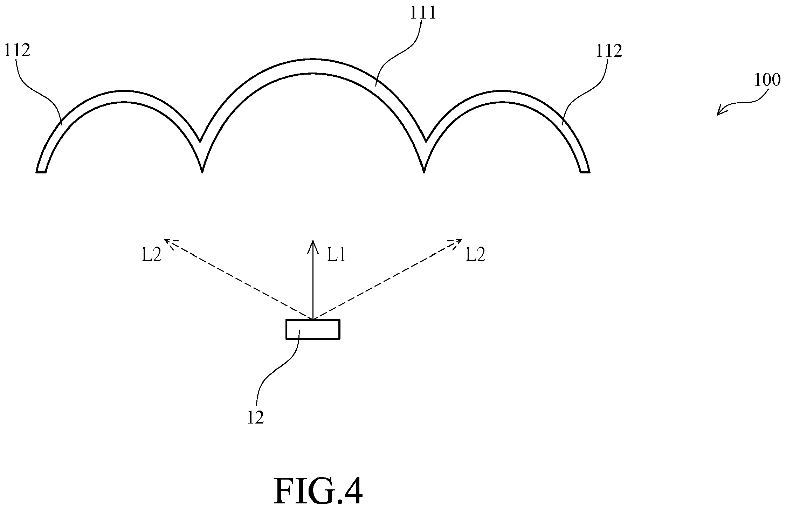

As shown in FIG. 4, the first light source 121 and the second light source 122 may be combined into a single variable color light module 12. For example, the variable color light module 12 may include two LED dies, and the two LED dies are packaged to form a LED device and can be used to generate color light of diverse colors. The variable color light module 12 is configured to generate the first color light L1 and the second color light L2. For example, the first color light L1 and the second color light L2 project to the first optical adjustment unit 111 and the second optical adjustment unit 112, and then are projected to the front of the illumination module 100 with multi light sources through a similar optical path, such that the reflected first color light L1 and the reflected second color light L2 project to approximately overlapping angular ranges.

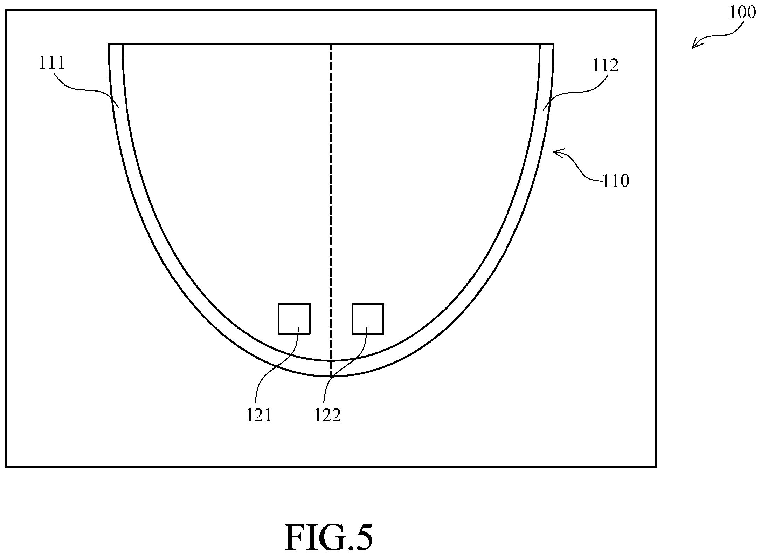

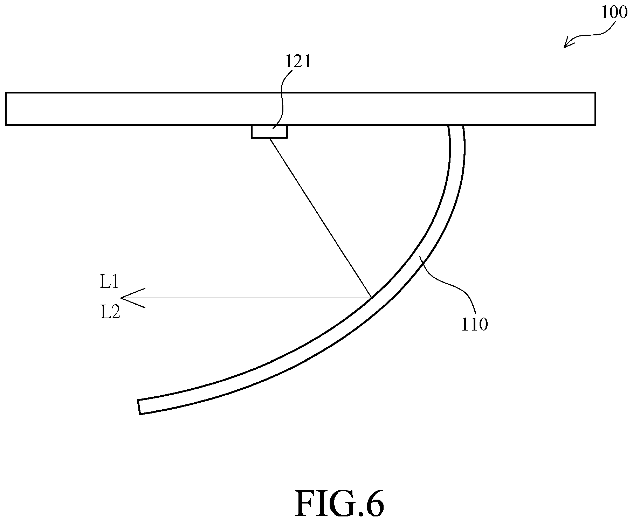

As shown in FIG. 5 and FIG. 6, FIG. 5 is a top cross-sectional view of the illumination module 100 with multi light sources, and FIG. 6 is a side cross-sectional view of the illumination module 100 with multi light sources. The first optical adjustment unit 111 and the second optical adjustment unit 112 may be combined into a single reflecting cup 110 with a continuous surface, and the first light source 121 and the second light source 122 are located in the reflecting cup 110. Specifically, the first optical adjustment unit 111 and the second optical adjustment unit 112 may be obtained by cutting a single reflecting cup into two parts. Further, the second light source 122 is blocked by the first light source 121, so only the first light source 121 is shown in FIG. 6.

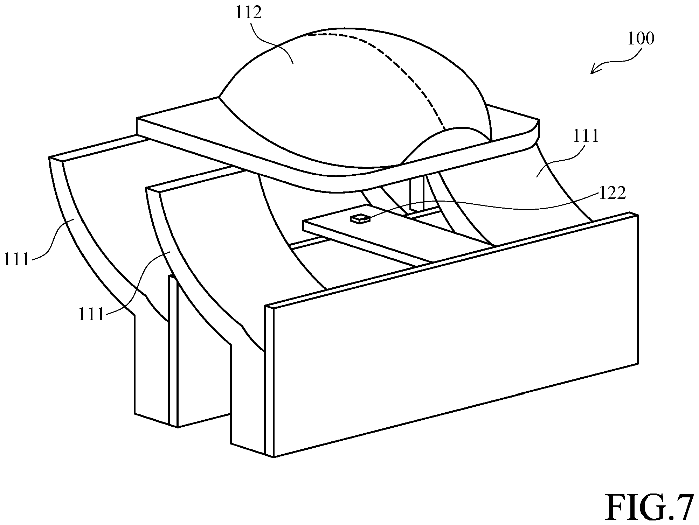

As shown in FIG. 7, in another example, the first optical adjustment unit 111 is a reflecting cup, and the second optical adjustment unit 112 is a lens. The first light source 121 faces the first adjustment unit 111, and the first adjustment unit 111 is configured to reflect the first color light L1 generated by the first light source 121. The second adjustment unit 112 is configured to refract the second color light L2 generated by the second light source 122, and the reflected first color light L1 and the refracted second color light L2 partially or fully overlap.

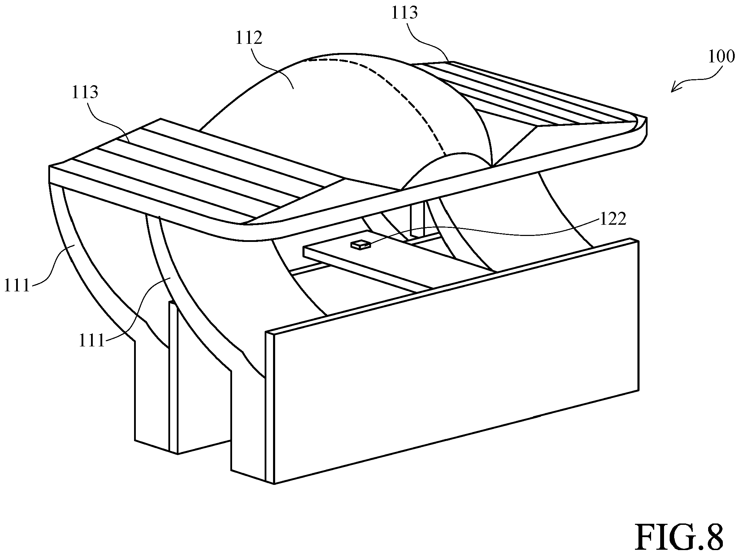

According to the invention, as shown in FIG. 8, a third optical adjustment unit 113 is arranged on the optical path of the first color light L1. The first color light L1 reflected by the first optical adjustment unit 111 is projected to the third optical adjustment unit 113, and then the first color light L1 is projected to the front of the illumination module 100 with multi light sources through the third optical adjustment unit 113. For example, the third optical adjustment unit 113 may be a projection lens.

In addition, the third optical adjustment unit 113 may be connected to the second optical adjustment unit 112, and is the extension member of the second optical adjustment unit 112. For example, the first light source 121 may be located on both sides of the second light source 122, and the third optical adjustment units 113 may be located on both sides of the second optical adjustment unit 112.

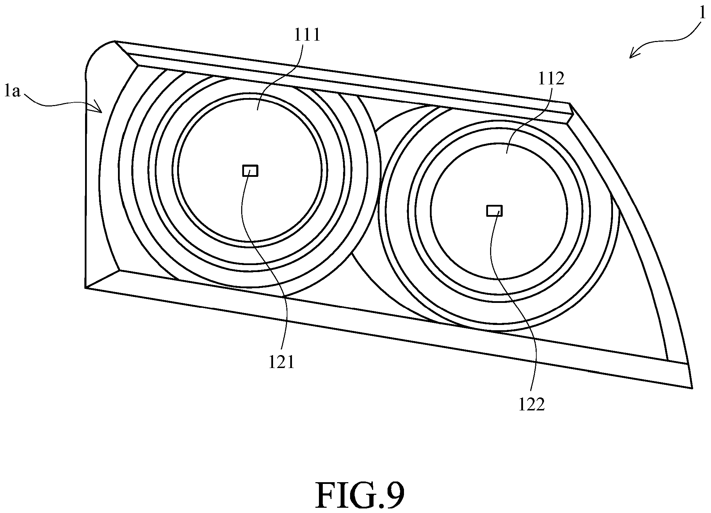

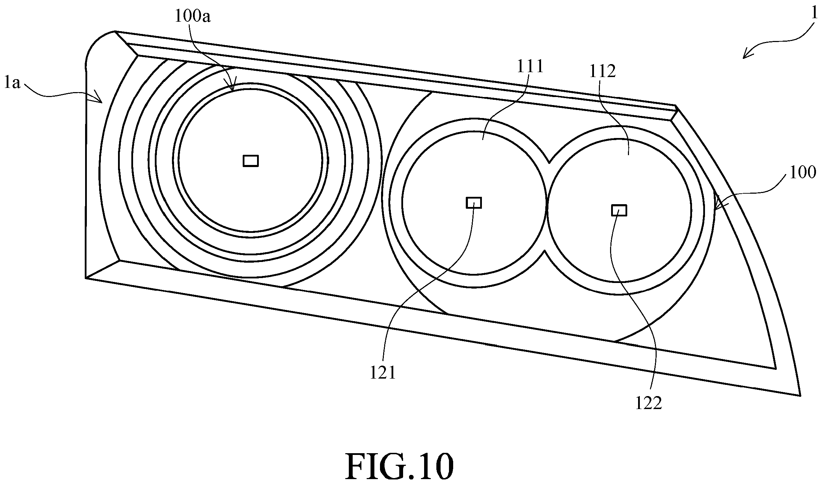

As shown in FIG. 9 and FIG. 10, in another example, the first optical adjustment unit 111 and the second optical adjustment unit 112 are lens spaced from each other.

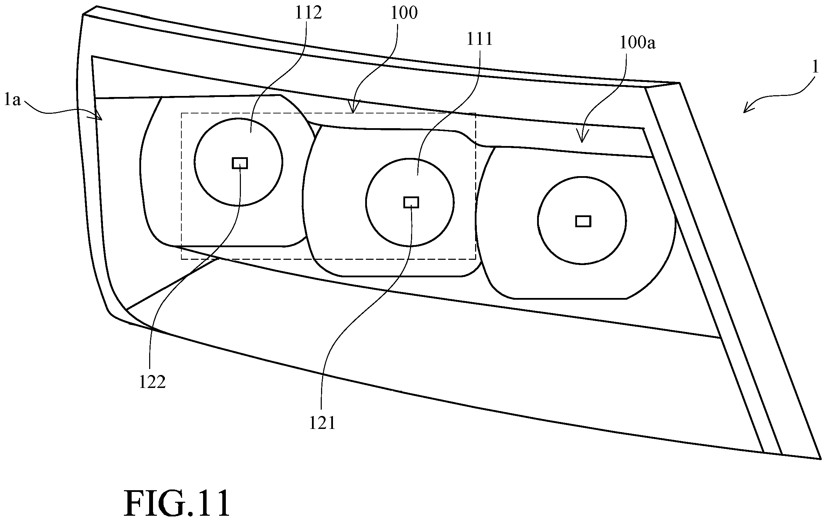

As shown in FIG. 11, the vehicle lamp 1 may include the illumination module 100 with multi light sources and an auxiliary illumination module 100a, and both are integrated in the lamp housing la, wherein the illumination module 100 with multi light sources includes a first optical adjustment unit 111, a first light source 121, a second optical adjustment unit 112 and a second light source 122. For example, the illumination module 100 may be a low beam module, and the auxiliary illumination module 100a may be a high beam module.

In one example of this disclosure, the first optical adjustment unit 111 and the first light source 121 may be combined into a lighting unit, while the second optical adjustment unit 112 and the second light source 122 may be combined into another light unit. In another example of this disclosure, the second optical adjustment unit 112 and the second light source 122 may be integrated into the auxiliary illumination module 100a.

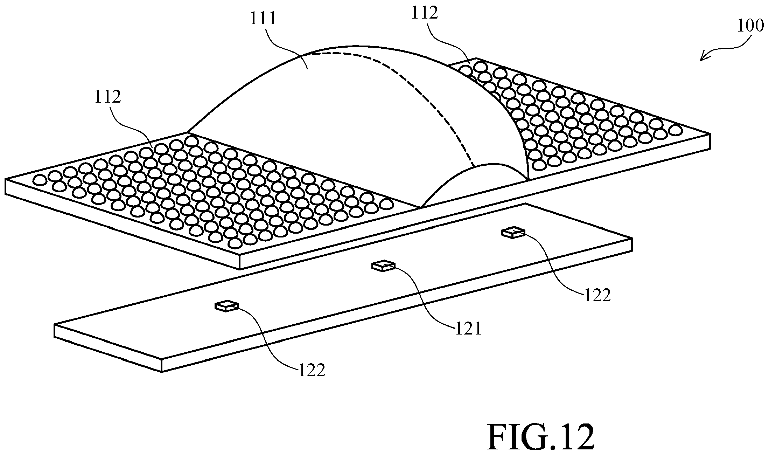

As shown in FIG. 12, the illumination module 100 with multi light sources includes a first optical adjustment unit 111, a first light source 121, two second optical adjustment units 112 and two second light sources 122. The first optical adjustment unit 111 and the second optical adjustment unit 112 are not limited to lenses with a single optical axis. The first optical adjustment unit 111 may be a lens with a single optical axis, and is disposed on the optical path of the first color light L1 generated by the first light source 121. The second optical adjustment unit 112 may be an optical diffusion element with a diffusing function, such as a diffuser plate, and the surface of the second optical adjustment unit 112 may have concave or convex pattern, wherein the second optical adjustment unit 112 is disposed on the optical path of the second color light L2 generated by the second light source 122. In other example, the second optical adjustment unit 112 may be a reflective diffusion element, which is configured to reflect the second color light L2 generated by the second light source 122 to a predetermined direction or area.

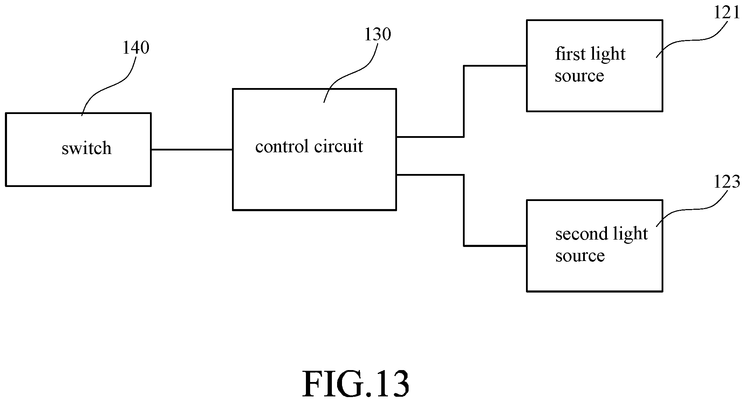

As shown in FIG. 13, the illumination module 100 with multi light sources further includes a control circuit 130 and a switch 140. The control circuit 130 is configured to control tum-on/turn-off of the first light source 121 and the second light source 122. For example, the control circuit 130 may be a multistage toggle switch. The switch 140 may be a high beam switch or an overtaking light switch of the vehicle. The switch 140 is configured to transmit a trigger signal to the control circuit 130, and the control circuit 130 turns on or turns off the first light source 121 and the second light source 122 according to the trigger signal.

When the first light source 121 is turned on, the control circuit 130 turns on or off the second light source 122 by accepting the trigger signal for a specific number of times as a cycle of triggering. For example, the switch 140 turns on the second light source 122 every three times it is triggered, and then turns off the second light source 122 when it is triggered again, until switch 140 is triggered another three times and turns on the second light source 122 again.

Specifically, the illumination module 100 with multi light sources of this disclosure may have three operation modes. The first operation mode is the first light source 121 and the second light source 122 are not emitting light, which is usually applied in the daytime or a well-lit driving environment.

The second operation mode is that the first light source 121 and the second light source 122 of the illumination module 100 emit light simultaneously. The first light source 121 is turned on at first to emit the first color light L1, while the second light source 122 is turned off and emits no light. The control circuit 130 receives the trigger signal for the specific number of times when the first light source 121 is turned on, and turns on the second light source 122 to emit the second color light L2 according to the cycle of triggering, and the first light source 121 remains to emit the first color light L1, so that the illumination module 100 with light sources emits the first color light L1 and the second color light L2 simultaneously. The second operation mode is usually used in the night or under-illuminated vehicle environment.

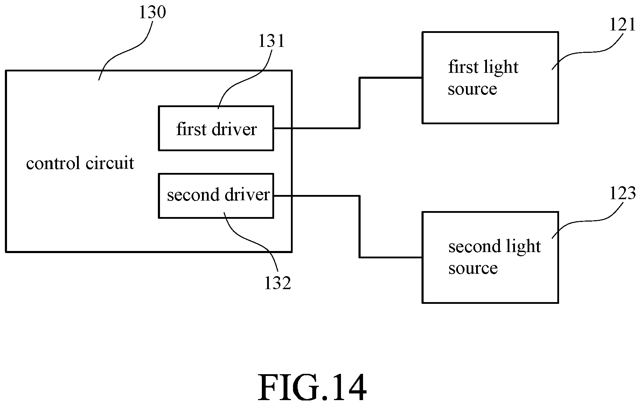

As shown in FIG. 14, in this case, the first light source 121 and the second light source 122 may need be turned on simultaneously, such as in the second operation mode. Therefore, the control circuit 130 may further include a first driver 131 and a second driver 132. The first driver 131 is configured to provide power to the first light source 121, and the second driver 132 is configured to provide power to the second light source 122. The two drivers provide sufficient total electrical power to the first light source 121 and the second light source 122, so as to avoid insufficient luminosity of the first color.

The first driver 131 and the second driver 132 integrated into the control circuit 130 shown in FIG. 14 is only one example of this disclosure, and is not intended to limit the scope of the patent application of the present invention. In other examples, the first driver 131 and the second driver 132 may be located outside the control circuit 130 and be connected to the control circuit 130. For example, the first driver 131 is located between the control circuit 130 and the first light source 121, and the second driver 132 is located between the control circuit 130 and the second light source 122.

The third operation mode is that only one of the first light source 121 and the second light source 122 of the illumination module 100 with multiple light sources is turned on. In this case, if the first light source 121 is turned off, the control circuit 130 receives the trigger signal for the specific number of times, and turns on the second light source 122 to emit the second color light L2 according to the cycle of triggering and turns off the first light source 122. If the first light source 121 is turned on and the low beam group is turned on, the control circuit 130 receives the trigger signal for the specific number of times, turns on the second light source 122 according to the cycle of triggering, and turns off the first light source 121.

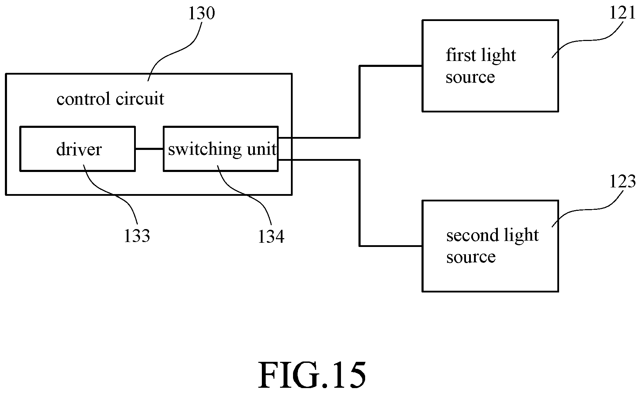

As shown in FIG. 15, in this case, the first light source 121 and the second light source 122 will not be turned on at the same time. Thus, the control circuit 130 only includes a driver 133 and a switching unit 134, wherein the driver 133 is configured to provide power to the switching unit 134, and then the switching unit 134 provides power to the first light source 121 or the second light source 122 depending on demand.

The driver 133 integrated into the control circuit 130 shown in FIG. 15 is only one example of this disclosure, and is not intended to limit the scope of the patent application of the present invention. In other examples, the driver 133 may be located outside the control circuit, and be connected to the control circuit 130.

In practical application, the ordinary headlamp can be directly replaced by the illumination module 100 described in this disclosure, and the light control lever in the vehicle can be adjusted, so that the vehicle is able to emit a lighting for bad weather. In other words, the vehicle lamp described in thus disclosure can be quickly and conveniently installed on the general vehicle, so as to improve the safety of the vehicle.

The above description is only a preferred embodiment of this invention, and is not intended to limit the scope of this invention. Modifications should be included within the scope of the invention defined by the claims.

## Claims

1. An illumination module (100) for a vehicle lamp (1) with multi light sources, **characterized by** comprising:
at least one first optical adjustment unit (111);
at least one first light source (121) configured to generate a first color light (L1), and projects the first color light (L1) to the first optical adjustment unit (111), wherein the first optical adjustment unit (111) is configured to project the first color light (L1) to a front of the illumination module (100) for the vehicle lamp (1) with multi light sources; at least one second optical adjustment unit (112); and
at least one second light source (122) configured to generate a second color light (L2), and projects the second color light (L2) to the second optical adjustment unit (112), wherein the second optical adjustment unit (112) is configured to project the second color light (L2) to the front of the illumination module (100) for the vehicle lamp (1) with multi light sources, and the first color light (L1) and the second color light (L2) partially or fully overlap;
**characterized in that**:
the first optical adjustment unit (111) is a reflecting cup (110), and the second optical adjustment unit (112) is a lens, and the illumination module (100) for the vehicle lamp (1) with multi light sources further comprises a third optical adjustment unit (113) connected to the second optical adjustment unit (112), wherein the third optical adjustment unit (113) is located on an optical path of the first color light (L1), the first color light (L1) reflected by the first optical adjustment unit (111) projects to the third optical adjustment unit (113), and projects to the front of the illumination module (100) for the vehicle lamp (1) with multi light sources via the third optical adjustment unit (113); and
the illumination module (100) for the vehicle lamp (1) with multi light sources further comprises a control circuit (130) being configured to turn-on or turn-off the first light source (121) and the second light source (122), and a switch (140) being configured to transmit a trigger signal to the control circuit (130), wherein the control circuit (130) turns on or off the second light source (122) by accepting the trigger signal for a specific number of times as a cycle of triggering.

2. The illumination module (100) for the vehicle lap (1) with multi light sources as claimed in claim 1, wherein the first color light (L1) is a white light, while the second color light (L2) is a yellow light.

3. The illumination module (100) for the vehicle lap (1) with multi light sources as claimed in claim 1, wherein the first light source (121) and the second light source (122) are integrated into a variable color light module (12), and projection ranges of the first color light (L1) and the second color light (L2) overlap.

4. The illumination module (100) for the vehicle lamp (1) with multi light sources as claimed in claim 1, wherein when the first light source is turned on, the control circuit (130) turns on or off the second light source (122) by accepting the trigger signal for the specific number of times as the cycle of triggering.

5. The illumination module (100) for the vehicle lamp (1) with multi light sources as claimed in claim 11, wherein the control circuit (130) turns on the second light source to emit the second color light (L2) according to the cycle of triggering, and the first light source (121) remains to emit the first color light (L1), wherein the control circuit (130) further includes a first driver (131) and a second driver (132), the first driver (131) is configured to provide power to the first light source (121), and the second driver (132) is configured to provide power to the second light source (122).

6. The illumination module (100) for the vehicle lamp (1) with multi light sources as claimed in claim 4, wherein the control circuit (130) receives the trigger signal for the specific number of times when the first light source (121) is turned on, and turns on the second light source (122) to emit the second color light (L2) according to the cycle of triggering and turns off the first light source (121), wherein the control circuit (130) includes a driver (133) and a switching unit (134), the driver (133) is configured to provide power to the switching unit (134), and then provide power to the first light source (121) or the second light source (122) via the switching unit (134).

7. A vehicle lamp (1), **characterized by** comprising:
a plurality of illumination modules (100) as claimed in any one of claim 1 to claim 6, integrated into a lamp housing (1a).

8. The vehicle lamp (1) as claimed in claim 7, further including at least one auxiliary illumination module (100a) integrated into the lamp housing (1a).

## Patentansprüche

1. Beleuchtungsmodul (100) für eine Fahrzeugleuchte (1) mit mehreren Lichtquellen,
**dadurch gekennzeichnet, dass** es umfasst:
mindestens eine erste optische Anpassungseinheit (111);
mindestens eine erste Lichtquelle (121), die konfiguriert ist zum Erzeugen eines ersten Farblichts (L1) und die das erste Farblicht (L1) auf die erste optische Anpassungseinheit (111) projiziert, wobei die erste optische Anpassungseinheit (111) konfiguriert ist zum Projizieren des ersten Farblichts (L1) auf eine Vorderseite des Beleuchtungsmoduls (100) für die Fahrzeugleuchte (1) mit mehreren Lichtquellen;
mindestens eine zweite optische Anpassungseinheit (112); und
mindestens eine zweite Lichtquelle (122), die konfiguriert ist zum Erzeugen eines zweiten Farblichts (L2) und die das zweite Farblicht (L2) auf die zweite optische Anpassungseinheit (112) projiziert, wobei die zweite optische Anpassungseinheit (112) konfiguriert ist zum Projizieren des zweiten Farblichts (L2) auf die Vorderseite des Beleuchtungsmoduls (100) für die Fahrzeugleuchte (1) mit mehreren Lichtquellen; und wobei sich das erste Farblicht (L1) und das zweite Farblicht (L2) teilweise oder vollständig überschneiden;
**dadurch gekennzeichnet, dass**:
die erste optische Anpassungseinheit (111) eine reflektierende Schale (110) ist und die zweite optische Anpassungseinheit (112) eine Linse ist, und das Beleuchtungsmodul (100) für die Fahrzeugleuchte (1) mit mehreren Lichtquellen ferner eine dritte optische Anpassungseinheit (113) umfasst, die mit der zweiten optischen Anpassungseinheit (112) verbunden ist, wobei sich die dritte optische Anpassungseinheit (113) in dem optischen Pfad des ersten Farblichts (L1) befindet, wobei das erste Farblicht (L1), das durch die erste optische Anpassungseinheit (111) reflektiert wird, auf die dritte optische Anpassungseinheit (113) projiziert wird, und über die dritte optische Anpassungseinheit (113) auf die Vorderseite des Beleuchtungsmoduls (100) für die Fahrzeugleuchte (1) mit mehreren Lichtquellen projiziert wird; und
wobei das Beleuchtungsmodul (100) für die Fahrzeugleuchte (1) mit mehreren Lichtquellen ferner eine Steuerschaltung (130), die konfiguriert ist, um die erste Lichtquelle (121) und die zweite Lichtquelle (122) einzuschalten oder auszuschalten; und einen Schalter (140) umfasst, der konfiguriert ist, um ein Triggersignal zu der Steuerschaltung (130) zu senden, wobei die Steuerschaltung (130) die zweite Lichtquelle (122) ein- oder ausschaltet, indem das Triggersignal mit einer spezifischen Häufigkeit als ein Triggerungszyklus akzeptiert wird.

2. Beleuchtungsmodul (100) für die Fahrzeugleuchte (1) mit mehreren Lichtquellen nach Anspruch 1, wobei das erste Farblicht (L1) ein weißes Licht ist, während das zweite Farblicht (L2) ein gelbes Licht ist.

3. Beleuchtungsmodul (100) für die Fahrzeugleuchte (1) mit mehreren Lichtquellen nach Anspruch 1, wobei die erste Lichtquelle (121) und die zweite Lichtquelle (122) in ein variables Farblichtmodul 12 integriert sind, und wobei sich die Projektionsbereiche des ersten Farblichts (L1) und des zweiten Farblichts (L2) überschneiden.

4. Beleuchtungsmodul (100) für die Fahrzeugleuchte (1) mit mehreren Lichtquellen nach Anspruch 1, wobei, wenn die erste Lichtquelle eingeschaltet ist, die Steuerschaltung (130) die zweite Lichtquelle (122) ein- oder ausschaltet, indem das Triggersignal mit der spezifischen Häufigkeit als Triggerungszyklus akzeptiert wird.

5. Beleuchtungsmodul (100) für die Fahrzeugleuchte (1) mit mehreren Lichtquellen nach Anspruch 1, wobei die Steuerschaltung (130) die zweite Lichtquelle einschaltet, um das zweite Farblicht (L2) gemäß dem Triggerungszyklus abzustrahlen, und wobei die erste Lichtquelle (121) eingeschaltet bleibt, um das erste Farblicht (L1) abzustrahlen, wobei die Steuerschaltung (130) ferner einen ersten Treiber (131) und einen zweiten Treiber (132) enthält, wobei der erste Treiber (131) konfiguriert ist, um die erste Lichtquelle (121) mit Strom zu versorgen, und wobei der zweite Treiber (132) konfiguriert ist, um die zweite Lichtquelle (122) mit Strom zu versorgen.

6. Beleuchtungsmodul (100) für die Fahrzeugleuchte (1) mit mehreren Lichtquellen nach Anspruch 4, wobei die Steuerschaltung (130) das Triggersignal mit der spezifischen Häufigkeit empfängt, wenn die erste Lichtquelle (121) eingeschaltet ist, und die zweite Lichtquelle (122) einschaltet, um das zweite Farblicht (L2) gemäß dem Triggerungszyklus abzustrahlen, und die erste Lichtquelle (121) ausschaltet, wobei die Steuerschaltung (130) einen Treiber (133) und eine Schalteinheit (134) enthält, wobei der Treiber (133) konfiguriert ist, um die Schalteinheit (134) mit Strom zu versorgen, und danach die erste Lichtquelle (121) oder die zweite Lichtquelle (122) über die Schalteinheit (134) mit Strom zu versorgen.

7. Fahrzeugleuchte (1), **dadurch gekennzeichnet, dass** sie umfasst:
eine Vielzahl von Beleuchtungsmodulen (100) nach einem der Ansprüche 1 bis 6, die in ein Leuchtengehäuse (1a) integriert sind.

8. Fahrzeugleuchte (1) nach Anspruch 7, das ferner mindestens ein Zusatzbeleuchtungsmodul (100a) enthält, das in das Leuchtengehäuse (1a) integriert ist.

## Revendications

1. Module d'éclairage (100) pour un feu de véhicule (1) avec de multiples sources de lumière, **caractérisé en ce qu'**il comprend :
au moins une première unité de réglage optique (111) ;
au moins une première source de lumière (121) conçue pour générer une lumière d'une première couleur (L1), et projeter la lumière de la première couleur (L1) vers la première unité de réglage optique (111), dans lequel la première unité de réglage optique (111) est conçue pour projeter la lumière de la première couleur (L1) vers un avant du module d'éclairage (100) pour le feu de véhicule (1) avec de multiples sources de lumière ; au moins une deuxième unité de réglage optique (112) ; et
au moins une deuxième source de lumière (122) conçue pour générer une lumière d'une deuxième couleur (L2), et projeter la lumière de la deuxième couleur (L2) vers la deuxième unité de réglage optique (112), dans lequel la deuxième unité de réglage optique (112) est conçue pour projeter la lumière de la deuxième couleur (L2) vers l'avant du module d'éclairage (100) pour le feu de véhicule (1) avec de multiples sources de lumière, et la lumière de la première couleur (L1) et la lumière de la deuxième couleur (L2) se chevauchent partiellement ou entièrement ;
**caractérisé en ce que** :
la première unité de réglage optique (111) est une coupelle réfléchissante (110), et la deuxième unité de réglage optique (112) est une lentille, et le module d'éclairage (100) pour le feu de véhicule (1) avec de multiples sources de lumière comprend en outre une troisième unité de réglage optique (113) reliée à la deuxième unité de réglage optique (112), dans lequel la troisième unité de réglage optique (113) est située sur un chemin optique de la lumière de la première couleur (L1), la lumière de la première couleur (L1) réfléchie par la première unité de réglage optique (111) se projette vers la troisième unité de réglage optique (113), et se projette vers l'avant du module d'éclairage (100) pour le feu de véhicule (1) avec de multiples sources de lumière par le biais de la troisième unité de réglage optique (113) ; et
le module d'éclairage (100) pour le feu de véhicule (1) avec de multiples sources de lumière comprend en outre un circuit de commande (130) conçu pour allumer ou éteindre la première source de lumière (121) et la deuxième source de lumière (122), et un commutateur (140) conçu pour transmettre un signal de déclenchement au circuit de commande (130), dans lequel le circuit de commande (130) allume ou éteint la deuxième source de lumière (122) en acceptant le signal de déclenchement un nombre spécifique de fois en tant que cycle de déclenchement.

2. Module d'éclairage (100) pour le feu de véhicule (1) avec de multiples sources de lumière selon la revendication 1, dans lequel la lumière de la première couleur (L1) est une lumière blanche, tandis que la lumière de la deuxième couleur (L2) est une lumière jaune.

3. Module d'éclairage (100) pour le feu de véhicule (1) avec de multiples sources de lumière selon la revendication 1, dans lequel la première source de lumière (121) et la deuxième source de lumière (122) sont intégrées dans un module de lumière de couleur variable (12), et les plages de projection de la lumière de la première couleur (L1) et de la lumière de la deuxième couleur (L2) se chevauchent.

4. Module d'éclairage (100) pour le feu de véhicule (1) avec de multiples sources de lumière selon la revendication 1, dans lequel, quand la première source de lumière est allumée, le circuit de commande (130) allume ou éteint la deuxième source de lumière (122) en acceptant le signal de déclenchement le nombre spécifique de fois en tant que cycle de déclenchement.

5. Module d'éclairage (100) pour le feu de véhicule (1) avec de multiples sources de lumière selon la revendication 11, dans lequel le circuit de commande (130) allume la deuxième source de lumière pour qu'elle émette la lumière de la deuxième couleur (L2) en fonction du cycle de déclenchement, et la première source de lumière (121) continue d'émettre la lumière de la première couleur (L1), dans lequel le circuit de commande (130) comporte en outre un premier circuit de sortie (131) et un deuxième circuit de sortie (132), le premier circuit de sortie (131) est conçu pour alimenter électriquement la première source de lumière (121), et le deuxième circuit de sortie (132) est conçu pour alimenter électriquement la deuxième source de lumière (122).

6. Module d'éclairage (100) pour le feu de véhicule (1) avec de multiples sources de lumière selon la revendication 4, dans lequel le circuit de commande (130) reçoit le signal de déclenchement le nombre spécifique de fois quand la première source de lumière (121) est allumée, et allume la deuxième source de lumière (122) pour qu'elle émette la lumière de la deuxième couleur (L2) en fonction du cycle de déclenchement et éteint la première source de lumière (121), dans lequel le circuit de commande (130) comporte en outre un circuit de sortie (133) et une unité de commutation (134), le circuit de sortie (133) est conçu pour alimenter électriquement l'unité de commutation (134), puis alimenter électriquement la première source de lumière (121) ou la deuxième source de lumière (122) par le biais de l'unité de commutation (134).

7. Feu de véhicule (1), **caractérisé en ce qu'**il comprend :
une pluralité de modules d'éclairage (100) selon l'une quelconque revendications 1 à 6, intégrés dans un boîtier de feu (1a).

8. Feu de véhicule (1) selon la revendication 7, comportant en outre au moins un module d'éclairage auxiliaire (100a) intégré dans le boîtier de feu (1a).
